Europäisches Patentamt

European Patent Office

Office européen des brevets

(19)

(11) Numéro de publication: **0 266 282 B1**

(12) FASCICULE DE BREVET EUROPEEN

(45) Date de publication de fascicule du brevet:
27.12.91

(51) Int. Cl.5: **B60R 25/10**

(21) Numéro de dépôt: 87420268.2

(22) Date de dépôt: 01.10.87

(54) Dispositif d'alarme détectant la modification d'assiette d'un corps.

(30) Priorité: 01.10.86 FR 8613903

(43) Date de publication de la demande:
04.05.88 Bulletin 88/18

(45) Mention de la délivrance du brevet:
27.12.91 Bulletin 91/52

(84) Etats contractants désignés:
DE GB GR IT

(56) Documents cités:
FR-A- 2 281 609
FR-A- 2 523 339
US-A- 4 358 750

(73) Titulaire: **METRAVIB R.D.S. Société Anonyme
64, Chemin des Mouilles B.P. 182
F-69132 Ecully Cédex(FR)**

(72) Inventeur: **André, Pierre
31, rue Albéric Pont
F-69005 Lyon(FR)**

(74) Mandataire: **Ropital-Bonvarlet, Claude
Cabinet BEAU DE LOMENIE, 51, avenue Jean-
Jaurès
F-69007 Lyon(FR)**

## Description

La présente invention entre dans le domaine technique des dispositifs d'alarme qui délivrent un signal de commande à un moyen avertisseur, lors de la variation relative de la position d'un corps par rapport à un référentiel.

Plus précisément, l'invention concerne les dispositifs d'alarme antivol destinés à équiper des véhicules en stationnement et prévus pour réagir à toute accélération imposée. Les dispositifs d'alarme du genre ci-dessus protègent ainsi contre le vol du véhicule ou des organes qui lui sont associés et, notamment, les roues.

On connaît, par le brevet **US 4 358 750** délivré le 9 novembre 1982, un dispositif d'alarme pour véhicule comportant un capteur piézoélectrique en tant qu'élément sensible de détection d'une accélération imposée au véhicule. Le capteur comporte une masse sismique supportée par un élément piézoélectrique qui délivre un signal électrique proportionnel au déplacement de la masse sismique. Le signal électrique, délivré par le capteur, est traité dans un circuit comportant, notamment, un filtre passe-bande et un comparateur à seuil. La bande passante du filtre est comprise entre 0,6 et 3 Hertz.

L'expérience montre que ce dispositif ne permet pas d'éliminer les signaux parasites générateurs de fausses alarmes, obtenus sous l'effet de mouvements accidentels, tels qu'un coup de vent ou de petits chocs.

Le fonctionnement intempestif de l'alarme ne peut être contrôlé qu'en abaissant le seuil de sensibilité au détriment alors de la fonction recherchée, en raison du fait, notamment, que ce dispositif d'alarme possède une fréquence propre de résonance mécanique proche de ou confondue avec celle également propre d'un véhicule automobile.

Par ailleurs, le dispositif ne permet pas de détecter les mouvements lents et/ou monotones correspondant à certaines conditions de vol d'un véhicule comme, par exemple, l'enlèvement par une grue ou des roues.

L'invention vise à remédier aux inconvénients énoncés ci-dessus en proposant un nouveau dispositif d'alarme permettant de délivrer un signal d'alarme en réponse à un changement d'assiette déterminé.

L'invention vise, également, un dispositif d'alarme dont l'organe sensible délivre, en réponse à une variation d'assiette d'un corps, une variation d'une grandeur électrique convertible, de façon simple, en un signal de commande d'un moyen avertisseur.

L'invention vise, encore, un dispositif d'alarme conçu pour ne présenter de sensibilité qu'à une fréquence contenue dans une plage de fréquence déterminée.

Pour atteindre les objectifs ci-dessus, le dispositif d'alarme est caractérisé en ce qu'il comprend :
- au moins un accéléromètre comportant un axe sensible disposé sensiblement parallèlement à un plan de référence lié au corps et choisi pour être, dans les conditions habituelles de surveillance, proche de l'horizontale, et détecter la modification d'assiette du corps,
- un convertisseur de la variation de la grandeur électrique en une tension proportionnelle,
- un étage d'amplification et de filtrage comprenant un filtre passe-bande limitant la tension proportionnelle de sortie à une bande passante définie par une valeur haute de l'ordre de $10^{-1}$ Hertz et par une valeur basse de l'ordre de $10^{-3}$ Hertz.
- et un circuit de comparaison de dépassement de seuils chargé de fournir un signal de commande à un avertisseur.

Diverses autres caractéristiques ressortent de la description faite ci-dessous en référence aux dessins annexés qui montrent, à titre d'exemples non limitatifs, des formes de réalisation de l'objet de l'invention.

La **fig. 1** représente, schématiquement, en perspective, un corps muni d'un dispositif d'alarme.

La **fig. 2** représente, schématiquement, en perspective, un capteur mis en oeuvre selon l'invention.

La **fig. 3** est un schéma d'un exemple de réalisation d'un circuit de traitement d'un signal délivré par un capteur.

La **fig. 4** est une coupe-élévation illustrant un autre capteur mis en oeuvre selon l'invention.

La **fig. 5** est un schéma d'un exemple de réalisation d'un circuit de traitement d'un signal délivré par le capteur de la **fig. 4**.

La **fig. 6** est une vue schématique représentant une variante de réalisation.

La **fig. 7** est un schéma illustrant une autre variante de réalisation.

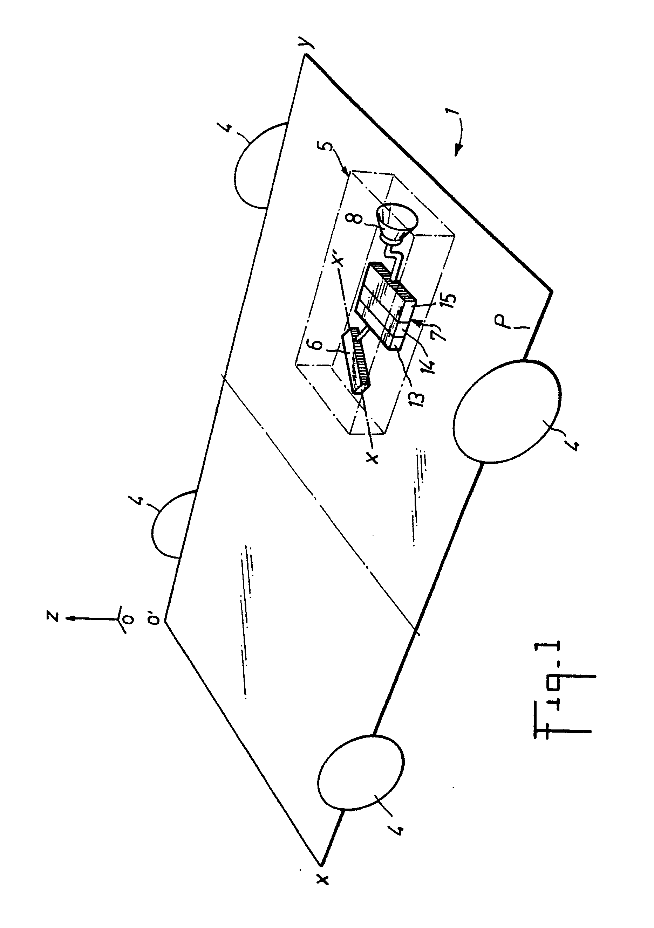

La **fig. 1** illustre un corps **1** auquel on affecte un plan **P** de référence qui est choisi pour être, dans les conditions habituelles de surveillance, proche de l'horizontale. A titre d'exemple, le corps **1** constitue, par exemple, un véhicule à quatre roues **4**.

Le corps **1** est équipé d'un dispositif d'alarme **5** qui comprend un capteur **6** connecté, par l'intermédiaire d'un circuit **7** de traitement, à un moyen **8** avertisseur. L'objet de l'invention ne porte pas sur le moyen **8** avertisseur qui ne sera pas décrit plus précisément par la suite et qui a été représenté à titre d'exemple par un haut-parleur.

Le capteur mis en oeuvre selon l'invention constitue un organe sensible à la variation d'assiette du plan **P** par rapport à l'axe de référence **Oz** défini par la pesanteur. Ainsi, toute variation d'assiette imposée au plan **P**, par rapport à une position initialement déterminée, se traduit par une variation de l'influence de la pesanteur sur le capteur qui délivre une variation d'une grandeur électrique, image de cette variation d'influence.

Selon l'invention, le capteur est constitué par un accéléromètre dont l'axe de sensibilité **x'-x"** est placé sensiblement parallèlement au plan **P**, lequel peut être considéré, dans le cas d'application à un véhicule, comme en moyenne horizontal. L'axe **x'-x"** est orienté dans le plan **P**, de manière à déceler des changements d'assiette selon des directions préférentielles. Dans le cas d'application visé, l'axe **x'-x"** est, avantageusement, orienté hors des directions longitudinales **O'y** et transversale **O'x** du véhicule, de manière à détecter les soulèvements produits, indifféremment, autour des axes **O'x** et **O'y** et correspondant à une tentative de vol des roues **4** ou à un enlèvement du véhicule.

Par accéléromètre, au sens de l'invention, il convient de considérer les capteurs de tous types, tels que piézoélectrique, piézorésistif, inductif, capacitif, optique et dont la première fréquence propre est largement supérieure au premier mode de corps solide, qui sont, par exemple, de l'ordre de quelques Hertz pour un véhicule.

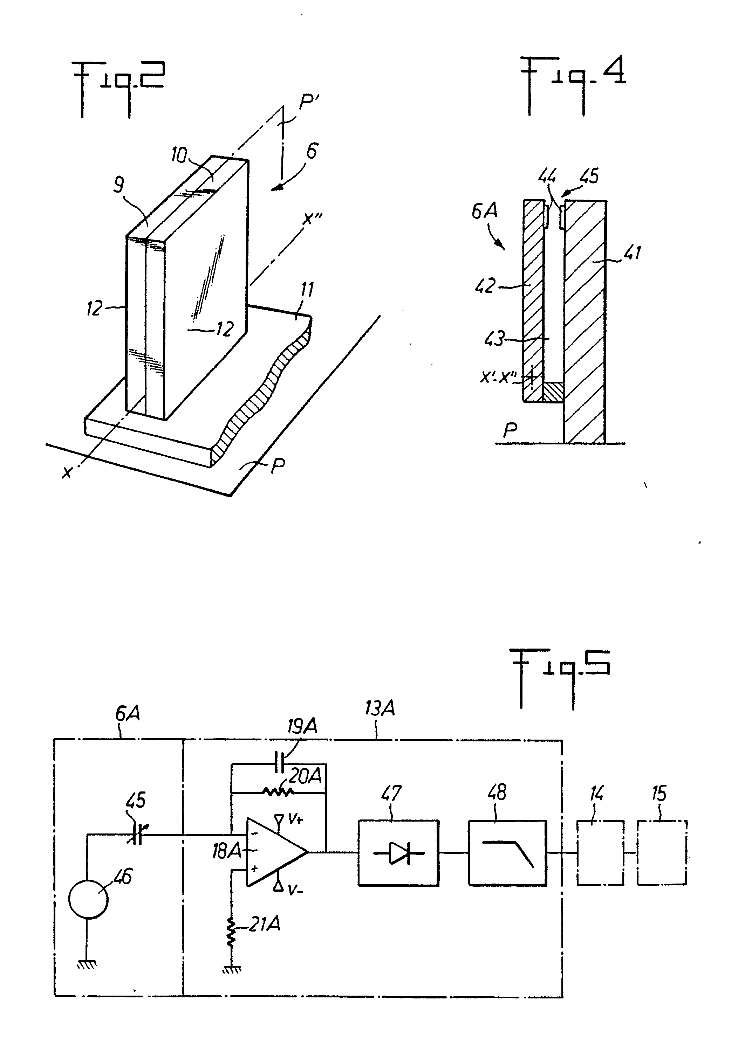

Dans un exemple de réalisation, le capteur utilisé selon l'invention est du type piézoélectrique, comme illustré à la **fig. 2**. Ce capteur comprend au moins deux éléments **9, 10,** par exemple plans, accolés et réunis entre eux par une embase **11** liée au plan **P**. A titre d'exemple, le capteur utilisé est une céramique bimorphe, parallèle **PXE**, commercialisée par la Société **R. T. C.**.

Les faces **12** des éléments **9, 10** constituent les armatures du capteur et sont situées parallèlement à l'axe **x'-x"**. Le plan **P'**, passant par l'axe **x'-x"**, constitue le plan dit "aveugle" du capteur, c'est-à-dire que ce dernier ne produit aucun effet lorsqu'un changement d'assiette est imposé selon un mouvement de pivotement dans ce plan.

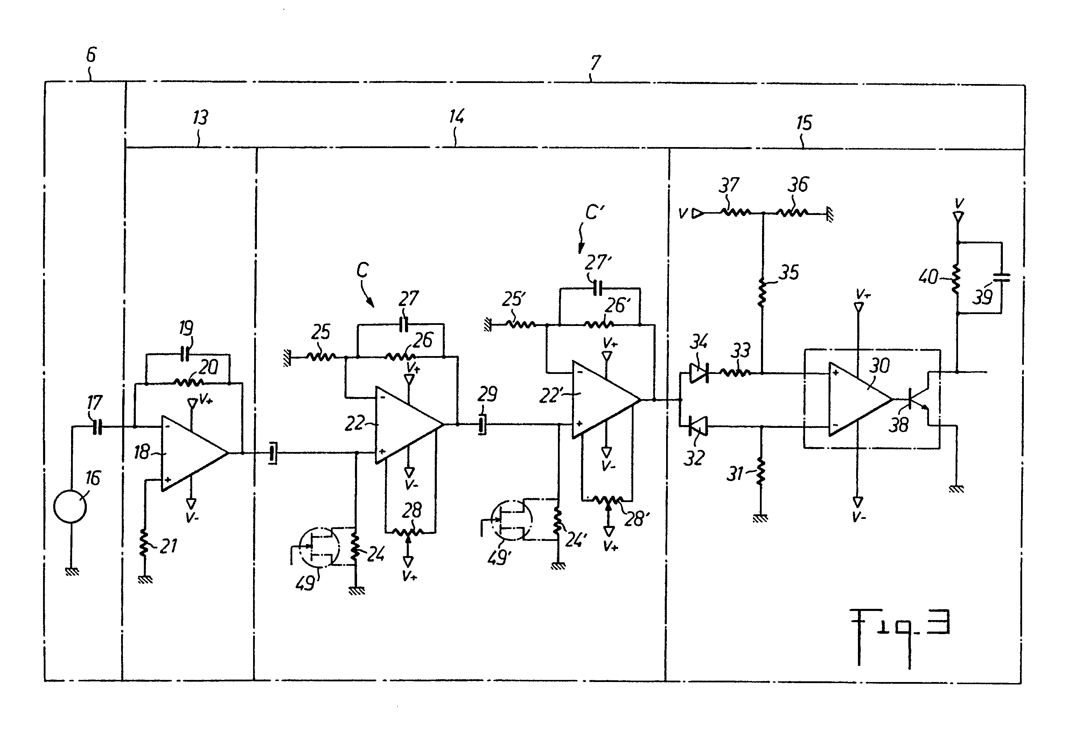

La variation d'assiette du plan **P**, imposant au capteur un mouvement hors du plan **P'**, provoque la flexion des éléments **9** et **10** qui produisent, comme variation de grandeur électrique de sortie, une variation de charges. Cette variation de grandeur électrique, correspondant à la variation de position du véhicule **1**, est exploitée par le circuit **7** de traitement ( **fig. 3**).

Ce circuit comprend trois étages successifs :
- un premier étage **13**, constitué par un convertisseur de la charge électrique délivrée par le capteur **6** en une tension de sortie proportionnelle,
- un second étage **14** qui assure une amplification et un filtrage du type passe-bande de la tension de sortie du convertisseur,
- un troisième étage **15** constituant un détecteur double seuil éliminant les signaux de faible amplitude compris entre deux seuils de polarités opposées.

Le convertisseur amplificateur **13** est associé en entrée au capteur **6** qui a été représenté par son schéma électrique équivalent, à savoir un générateur **16** de tension en série avec une capacité **17**.

Le convertisseur **13** comprend un amplificateur opérationnel **18** dont l'entrée inverseuse est reliée à la capacité **17** et à la sortie du même amplificateur par l'intermédiaire d'un condensateur **19** et d'une résistance **20** montés en parallèle. L'entrée non inverseuse de l'amplificateur **18** est connectée à la masse par l'intermédiaire d'une résistance **21**.

L'étage **14** d'amplification et de filtrage du type passe-bande est composé d'un premier circuit **C** comprenant un amplificateur opérationnel **22** dont l'entrée non inverseuse est reliée par un condensateur **23** à la sortie de l'étage **13** et à la masse par une résistance **24**. L'entrée inverseuse de l'amplificateur est connectée à la masse par une résistance **25** et à la sortie de l'amplificateur **22** par une résistance **26** et un condensateur **27** disposés en parallèle. Un potentiomètre **28** crée la tension d'offset qui force la tension de sortie de l'amplificateur **22** à être égale à zéro au repos.

Le signal de sortie de l'amplificateur **22** est injecté par l'intermédiaire d'un condensateur **29** à un second circuit **C'** identique possédant les mêmes éléments désignés par les mêmes références affectés d'un signe prime. Le circuit **C'** est prévu pour obtenir un gain élevé et une sélectivité plus importante en sortie du second étage **14**.

L'étage **15** détecteur-comparateur double seuil comprend un amplificateur opérationnel **30** dont l'entrée inverseuse est reliée à la masse par une résistance **31** et par une diode **32** à la sortie du second étage **14**. L'entrée non inverseuse de l'amplificateur **30** est connectée, d'une part, à la sortie du second étage **14** par une résistance **33** en série avec une diode **34** montée en inverse par rapport à la diode **32** et, d'autre part, à travers une résistance **35**, à un pont diviseur formé d'une résistance **36** reliée à la masse et d'une résistance **37** reliée à la tension négative d'alimentation. La sortie de l'amplificateur **30** peut être injectée à la base d'un transistor **38** dont l'émetteur est relié à la masse et le collecteur à la tension de batterie du véhicule, par l'intermédiaire d'un condensateur **39** et d'une résistance **40** en parallèle. Le transistor **38** augmente la puissance de sortie du signal utile qui attaque le moyen **5** avertisseur, non représenté sur la **fig. 3**.

Le premier étage **13** convertit la variation de charges du capteur en une tension de sortie image de la variation de l'influence de la pesanteur sur le capteur. Cette tension de sortie est amplifiée et filtrée par l'étage 14, de manière à ne conserver que les signaux de fréquence correspondant à la bande de surveillance. Par exemple, pour un véhicule à protéger des tentatives de vol, tout en éliminant les signaux parasites générateurs de fausses alarmes (petits chocs, coup de vent, etc...), des essais ont montré que la bande passante correspondante possède une valeur comprise entre une limite haute de l'ordre de $10^{-1}$ Hertz et une limite basse de l'ordre de $10^{-3}$ Hertz.

Le signal filtré est ensuite traité par le troisième étage 15 qui élimine les signaux de faible amplitude correspondant à des parasites. Par exemple, ce troisième étage ne délivre un signal de commande au moyen 5 avertisseur que lorsque l'amplitude du signal est hors d'une plage de surveillance comprise entre + 1 et -1 volt correspondant, en général, à une variation d'assiette de ± 3 %. Le dispositif permet ainsi de déceler la variation d'assiette, quel qu'en soit le sens, le signal pouvant être positif ou négatif hors de la plage de surveillance mentionnée ci-dessus.

Le troisième étage 15 peut être réalisé par un circuit redresseur monté en amont d'un comparateur simple seuil, permettant d'assumer, également, la fonction du circuit 15 déjà décrit.

On notera qu'il est intéressant d'interposer un moyen de temporisation entre la sortie du troisième étage 15 et le moyen 5 avertisseur, de façon à retarder le début du fonctionnement du dispositif d'alarme. Toutefois, en raison des mesures quasi statiques effectuées, les constantes de temps du second étage 14 entraînent des durées de désaturation prohibitives qui laissent le dispositif d'alarme non opérationnel pendant un temps assez long. A titre d'exemple, cet inconvénient est en partie supprimé en court-circuitant momentanément les résistances 24 et 24' du second étage 14, par un transistor 49, 49' du type métal oxyde à effet de champ ( **MOSFET**) représenté en trait mixte sur la **fig. 3**.

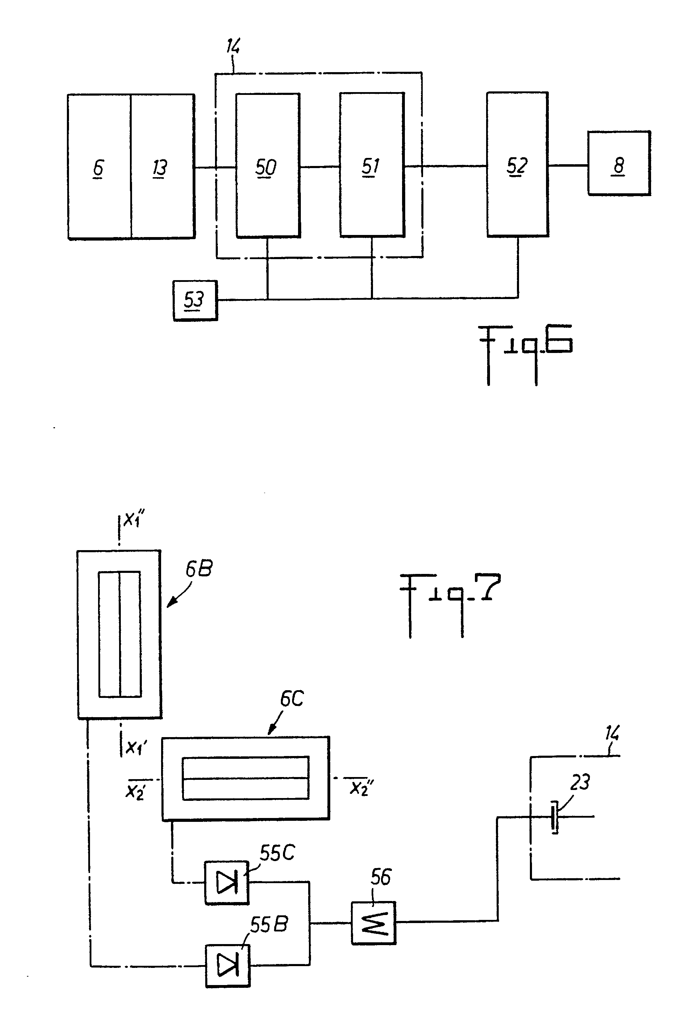

La **fig. 4** montre une variante de réalisation selon laquelle l'accéléromètre est constitué par un capteur 6A du type capacitif. Un tel capteur capacitif présente l'avantage d'être moins sensible à la température que l'accéléromètre du type précédent et offre la possibilité de travailler à une fréquence plus élevée sur le premier étage 13.

Le capteur capacitif 6A est constitué d'un élément fixe 41, par exemple plan, et d'un élément flexible 42 disposés, en regard l'un de l'autre et espacés d'un diélectrique 43. Chaque face des éléments 41 et 42 en vis-à-vis porte une zone 44 métallisée isolée électriquement de son support, afin de constituer une armature de capacité 45. Les éléments plans 41 et 42 sont disposés de manière que l'axe sensible **x'-x"** soit orienté, comme dans le cas du capteur piézoélectrique, par rapport au plan **P** de référence.

L'une des armatures de la capacité 45 se déplace par rapport à l'autre proportionnellement à la variation de l'influence de la pesanteur subie par le capteur, ce qui produit une variation de capacité qui est traduite en une tension proportionnelle par un convertisseur amplificateur 13A, comme illustré à la **fig. 5**. Selon cette figure, l'entrée du convertisseur 13A est connectée au capteur capacitif 6A comprenant la capacité 45 disposée en série avec un générateur de tension 46.

Le convertisseur 13A comprend un amplificateur opérationnel 18A dont l'entrée inverseuse est reliée à la capacité 45 et à la sortie de l'amplificateur 18A par un circuit de contre-réaction composé d'un condensateur 19A et d'une résistance 20A montés en parallèle. L'entrée non inverseuse de l'amplificateur opérationnel 18A est connectée à la masse par une résistance 21A.

De préférence, le générateur de tension 46 est un oscillateur générant une porteuse sinusoïdale ou de forme quelconque, à fréquence élevée, permettant d'utiliser un amplificateur opérationnel 18A moins performant et donc moins coûteux que l'amplificateur 18 utilisé pour un capteur piézoélectrique. Le signal de sortie de l'amplificateur 18A passe, successivement, par un redresseur 47 et un filtre 48, du type passe-bas, restituant un signal de basse fréquence pour permettre d'attaquer le second et le troisième étages 14, 15 du circuit de traitement 7.

Ce montage permet de disposer, en sortie de l'amplificateur 18 a, d'un signal de haut niveau, de même ordre de grandeur que celui fourni par le générateur 46, à condition de choisir une capacité 19 a de même ordre de grandeur que la capacité 45. Un tel signal de haut niveau, plus facile à traiter, permet de mettre en oeuvre des éléments 47 et 48 passifs, tout en fournissant un signal de haut niveau à l'entrée de l'étage 14.

La **fig. 6** montre une variante de réalisation selon laquelle l'étage 14 comprend un convertisseur analogique-numérique 50 précédant un filtre numérique 51 dont la sortie est connectée à un comparateur double seuil numérique 52 assumant la même fonction que le détecteur 15 de l'exemple selon la **fig. 3**. Dans un tel cas, une horloge 53 pilote le convertisseur 50, le filtre 51 et le comparateur 52.

De manière à supprimer l'existence d'un plan **P'** aveugle ( **y'-y"**), l'invention préconise de mettre en oeuvre deux accéléromètres dont les axes sensibles sont alors, de préférence, orthogonaux relativement, tout en étant placés sensiblement parallèlement au plan **P**. Dans un tel cas, il peut être prévu de mettre en oeuvre deux circuits 7 indépendants ou alors, comme illustré par la **fig. 7**, d'associer les accéléromètres **6B, 6C** à deux étages convertisseurs-redresseurs **55B, 55C** qui sont raccordés à un circuit commun comprenant un sommateur **56** et qui est connecté à l'étage **14** en amont du condensateur **23**.

L'invention n'est pas limitée aux exemples décrits et représentés, car diverses modifications peuvent y être apportées en restant dans le cadre des revendications qui suivent.

## Revendications

1. Dispositif d'alarme du type comprenant, en tant que capteur, un accéléromètre fournissant une variation d'une grandeur électrique image de la variation de position d'un corps ( **1**), un étage de traitement et d'amplification de la grandeur électrique pour produire un signal de commande d'un moyen ( **6**) avertisseur,
   caractérisé en ce qu'il comprend :
   - au moins un accéléromètre ( **6, 6A**) comportant un axe sensible ( **x'-x"**) disposé sensiblement parallèlement à un plan de référence ( **P**) lié au corps et choisi pour être dans les conditions habituelles de surveillance, proche de l'horizontale, et détecter la modification d'assiette du corps,
   - un convertisseur ( **13, 13A**) de la variation de la grandeur électrique en une tension proportionnelle,
   - un étage ( **14**) d'amplification et de filtrage comprenant un filtre passe-bande ( **C, C'**) limitant la tension proportionnelle de sortie à une bande passante définie par une valeur haute de l'ordre de $10^{-1}$ Hertz et par une valeur basse de l'ordre de $10^{-3}$ Hertz,
   - et un circuit ( **15**) de comparaison de dépassement de seuils chargé de fournir un signal de commande à un avertisseur.

2. Dispositif d'alarme selon la revendication 1, caractérisé en ce que l'axe sensible ( **x'-x"**) est orienté hors de toute direction principale contenue dans le plan ( **P**).

3. Dispositif d'alarme selon la revendication 1, caractérisé en ce que le capteur comprend deux accéléromètres ( **6B, 6C**) dont les axes sensibles sont dans deux directions différentes.

4. Dispositif d'alarme selon la revendication 3, caractérisé en ce que les deux accéléromètres sont associés à deux étages convertisseurs-redresseurs ( **55B, 55C**) raccordés à un circuit commun comprenant un sommateur ( **51**) et connecté à l'étage d'amplification-filtrage ( **14**).

5. Dispositif d'alarme selon la revendication 1, caractérisé en ce que le circuit ( **15**) de comparaison détecte, autour de la position initiale du corps, la variation d'assiette du corps, quel qu'en soit le sens, et au-delà d'une plage de surveillance comprise entre ± 3 % de la variation d'assiette.

6. Dispositif d'alarme selon la revendication 1, 4 ou 5 caractérisé en ce que la sortie de l'étage ( **14**) d'amplification-filtrage est connectée à l'entrée d'un comparateur-détecteur double seuil ( **15, 52**) qui délivre en sortie un signal de commande au moyen ( **6**) avertisseur lorsque la tension négative ou positive appliquée à l'entrée du comparateur détecteur n'est pas comprise entre les seuils correspondant à la plage de surveillance.

7. Dispositif d'alarme selon la revendication 1, 4 ou 6, caractérisé en ce qu'il comprend un moyen de temporisation disposé entre la sortie du comparateur-détecteur ( **15, 52**) et le moyen ( **5**) avertisseur.

8. Dispositif d'alarme selon l'une des revendications 1 à 4, caractérisé en ce que le capteur est constitué par une lame (6) piézoélectrique bimorphe produisant en sortie une variation de charges lors de la variation relative de l'assiette du corps ( **1**) et en ce que la sortie de la lame est reliée à un convertisseur amplificateur ( **13**) de la variation de charges en une tension proportionnelle.

9. Dispositif d'alarme selon l'une des revendications 1 à 4, caractérisé en ce que le capteur est du type capacitif ( **6A**) produisant en sortie une variation de capacité lors de la variation relative de l'assiette du corps ( **1**) et en ce que la sortie de la capacité est connectée à un convertisseur amplificateur ( **13A**) de la variation de capacité en une tension proportionnelle.

10. Dispositif d'alarme selon la revendication 9, caractérisé en ce qu'il comprend, successivement :
    - un générateur de porteuse ( **46**),
    - une capacité ( **45**),
    - un convertisseur ( **13A**) comprenant un amplificateur ( **18A**) associé à un circuit de contre réaction composé d'une résistance ( **20A**) et d'une capacité ( **19A**) de même ordre de grandeur que la capacité

( 45),
- un redresseur ( 47),
- et un filtre ( 48) du type passe-bas.

**11.** Dispositif d'alarme selon la revendication 9, caractérisé en ce qu'il comprend :
- un étage ( 14) constitué par un convertisseur analogique-numérique ( 50) et par un filtre numérique ( 51),
- un étage ( 15) constitué par un comparateur double seuil ( 52),
- et une horloge ( 53) pilotant le convertisseur ( 50), le filtre ( 51) et le comparateur ( 52).

## Claims

**1.** Alarm device of the type comprising, as sensor, an accelerometer providing a variation of the electric quantity representing the variation of the position of a body (**1**), a processing and amplifying stage of the electric quantity to produce a control signal of a warning means (**6**), characterized in that it comprises :
- at least one accelerometer (**6, 6A**) comprising a sensing axis (**x'-x"**) disposed substantially parallel to a reference plane (**P**) connected to the body and selected to be, under the normal control conditions, near to the horizontal, and to detect the change in the attitude of the body,
- a converter (**13, 13A**) for converting the electric quantity into a proportional voltage,
- an amplifying and filtering stage (**14**) comprising a bandpass filter (**C, C'**) limiting the proportional output voltage to a pass-band defined by a high value of the order of $10^{-1}$ Hz and by a low value of the order of $10^{-1}$ Hz.
- and a threshold violation comparing circuit (**15**) whose role is to provide a control signal to the warning means.

**2.** Alarm device according to claim 1, characterized in that the sensing axis (**x'-x"**) is directed outwardly any main direction contained in the plane (**P**).

**3.** Alarm device according to claim 1, characterized in that the sensor includes two accelerometers (**6B, 6C**) of which the sensing axes are in two opposite directions.

**4.** Alarm device according to claim 3, characterized in that both accelerometers are associated to two rectifier-converter stages (**55B, 55C**) connected to a common circuit comprising an averager (**51**) and connected to the amplying-filtering stage (**14**).

**5.** Alarm device according to claim 1, characterized in that the comparator circuit (**15**) detects, around the initial position of the body, the variation of attitude of the body, whatever the direction, and over a control range comprised between ± 3% of the variation of the attitude.

**6.** Alarm device according to claim 1, 4 or 5, characterized in that the output of the amplifying-filtering stage (**14**) is connected to the input of a double-threshold detector-comparator (**15, 52**) which outputs a control signal to the warning means (**6**) when the negative or positive voltage applied to the input of the detector-comparator is not between the thresholds corresponding to the control range.

**7.** Alarm device according to claim 1, 4 or 6, characterized in that it comprises a time-delay means disposed between the output of the detector-comparator (**15, 52**) and the warning means (**5**).

**8.** Alarm device according to one of claims 1 to 4, characterized in that the sensor is constituted by a bimorph piezoelectric plate (**6**) producing in output a variation of loads during the relative variation of the attitude of the body (**1**) and in that the output of the plate is connected to an amplifier converter (**13**) of the variation of loads into a proportional voltage.

**9.** Alarm device according to one of claims 1 to 4, characterized in that the sensor is of the capacitive (**6A**) type producing in output a variation of capacitance during the relative variation of the attitude of the body (**1**) and in that the output of the capacitance is connected to an amplifier converter (**13A**) of the variation of capacitance into a proportional voltage.

**10.** Alarm device according to claim 9, characterized in that it comprises, successively,
- a carrier generator (**46**),
- a capacitance (**45**),
- a converter (**13A**) comprising an amplifier (**18A**) associated to a reverse feedback circuit made of a resistor **20A** and of a capacitor (**19A**) of the same order of quantity as the capacitance (**45**),
- a rectifier (**47**),
- and a bandpass-type filter (**48**).

**11.** Alarm device according to claim 9, characterized in that it comprises :
- a stage (**14**) constituted by an analog-to-digital converter (**50**) and a digital filter (**51**),
- a stage (**15**) constituted by a double-threshold comparator (**52**),
- and a clock (**53**) monitoring the converter (**50**), the filter (**51**) and the comparator (**52**).

**Patentansprüche**

1. Alarmanlage mit einem Detektor, der einen Beschleunigungsmesser, der eine Änderung einer elektrischen Größe als Maß für die Änderung der Lage eines Körpers (1) liefert, sowie eine Bearbeitungs- und Verstärkungsstufe für die elektrische Größe zur Erzeugung eines Steuersignals für eine Meldeanordnung (6) aufweist, **gekennzeichnet** durch:
- mindestens einen Beschleunigungsmesser (6, 6A) mit einer empfindlichen Achse (x'-x"), die im wesentlichen parallel zu einer Bezugsebene (P) des Körpers verläuft und die so gewählt ist, daß sie unter Normalbedingungen der Überwachung etwa in der Horizontalen orientiert ist und die Änderung der Lage des Körpers erfaßt,
- einen Wandler (13, 13A) der die Änderung der elektrischen Größe in eine proportionale Spannung wandelt,
- eine Verstärkungs- und Filterstufe (14) mit einem Bandfilter (C, C'), der die proportionale Ausgangsspannung auf ein Durchlaßband begrenzt, das durch einen oberen Wert der Größenordnung $10^{-1}$ Hertz und einen unteren Wert der Größenordnung $10^{-3}$ Hertz beschränkt ist, und
- eine Vergleicherschaltung (15), die auf das Überschreiten der Grenzwerte anspricht und ein Steuersignal an eine Meldeanordnung abgibt.

2. Alarmanlage nach Anspruch 1, dadurch gekennzeichnet, daß die empfindliche Achse (x'-x") außerhalb jeder Hauptrichtung, die in der Ebene (P) liegt, orientiert ist.

3. Alarmanlage nach Anspruch 1, dadurch gekennzeichnet, daß der Detektor zwei Beschleunigungsmesser (6B, 6C) aufweist, deren empfindliche Achsen in zwei verschiedenen Richtungen liegen.

4. Alarmanlage nach Anspruch 3, dadurch gekennzeichnet, daß die beiden Beschleunigungsmesser an zwei Gleichrichterwandler (55B, 55C) geschaltet sind, die an einen gemeinsamen Kreis mit einem Summierglied (51) geschaltet und an die Verstärkerfilterstufe (14) angeschlossen sind.

5. Alarmanlage nach Anspruch 1, dadurch gekennzeichnet, daß die Vergleicherschaltung (15) um die Ausgangslage des Körpers herum die Änderung der Lage des Körpers unabhängig von der Richtung der Lageveränderung und außerhalb eines Lageänderungsbereichs von ± 3 % erfaßt.

6. Alarmanlage nach Anspruch 1, 4 oder 5, dadurch gekennzeichnet, daß der Ausgang der Verstärker-Filter-Stufe (14) an den Eingang eines Vergleicherdetektors mit doppelter Schwelle (15, 52) geschaltet ist, der als Ausgangssignal ein Steuersignal an die Meldeanordnung (6) liefert, wenn die negative oder positive Spannung, die an den Eingang des Vergleicherdetektors angelegt ist nicht innerhalb der Schwellenwerte liegt, die dem Überwachungsbereich entsprechen.

7. Alarmanlage nach Anspruch 1, 4 oder 6, gekennzeichnet durch eine Zeitverzögerungsvorrichtung, die zwischen dem Ausgang des Vergleicherdetektors (15, 52) und der Meldevorrichtung (5) angeordnet ist.

8. Alarmanlage nach einem der Ansprüche 1 bis 4, dadurch gekennzeichnet, daß der Detektor ein bimorphes piezoelektrisches Plättchen (6) aufweist, das als Ausgangssignal eine Ladungsänderung während einer relativen Lageänderung des Körpers (1) erzeugt und dadurch, daß der Ausgang des Plättchens an einen Wandlerverstärker (13) geschaltet ist, der die Ladungsänderung in eine proportionale Spannungsänderung wandelt.

9. Alarmanlage nach einem der Ansprüche 1 bis 4, dadurch gekennzeichnet, daß der Detektor ein kapazitiver Detektor (6A) ist, der als Ausgangssignal eine Kapazitätsänderung während einer relativen Lageänderung des Körpers (1) erzeugt und dadurch, daß der Ausgang des Kondensators an einen Wandlerverstärker (13A) geschaltet ist, der die Kapazitätsänderung in eine proportionale Spannung wandelt.

**10.** Alarmanlage nach Anspruch 9,
dadurch gekennzeichnet, daß sie aufweist:
- einen Trägerwellengenerator (46),
- einen Kondensator (45),
- einen Wandler (13A) mit einem Verstärker (18A), der mit einem Gegenreaktionsschaltkreis verbunden ist, bestehend aus
einem Widerstand (20A) und einem Kondensator (19A), dessen Kapazität dieselbe Größenordnung hat wie die des Kondensators (45),
- einen Gleichrichter (47),
- und einen Bandpassfilter (48).

**11.** Alarmanlage nach Anspruch 9,
dadurch gekennzeichnet, daß sie aufweist:
- eine Stufe (14) bestehend aus einem
Analog/Digital-Wandler (50) und einem
Digitalfilter (51),
- eine Vergleicherstufe (15) mit doppeltem
Schwellenwert (52), und
- einen Taktgeber (53), der den Wandler
(50), den Filter (51) und den Vergleicher
(52) steuert.

Fig.1

EP 0 266 282 B1

# Fig.2

# Fig.4

# Fig.5

Fig.3

EP 0 266 282 B1

Fig.6

Fig.7